# EUROPEAN PATENT SPECIFICATION

(11) **EP 1 339 198 B1**
(45) Date of publication and mention of the grant of the patent: **08.09.2004**
(21) Application number: 02290445.2
(22) Date of filing: 22.02.2002
(51) Int. Cl.: H04L 29/06, H04L 12/46, H04J 3/16

(54) **Enhanced transport of ethernet traffic over a transport SDH/SONET network**
Verbesserter Transport des Ethernet-Verkehrs über ein SDH/SONET-Transportnetz
Transport renforcée du trafic Ethernet par un réseau du transport SDH/sonet (HNS)

(43) Date of publication of application: 27.08.2003
(73) Proprietor: ALCATEL, 75008 Paris (FR)
(72) Inventor: Maggio, Santo, 20064 Gorgonzola (Milano) (IT); Panonzini, Massimo, 20059 Vimercate (Milano) (IT); Pessina, Alberto, 20052 Monza (Milano) (IT); Pozzoli, Elena, 20034 Giussano (Milano) (IT); Sorbara, Giuseppe, 20031 Cesano Maderno (Milano) (IT); Ghisio, Marco, 20010 Casorezzo (Milano) (IT)
(74) Representative: Menzietti, Domenico

(56) References cited:
- EP-A- 0 924 901
- EP-A- 0 982 900
- WO-A-01/15363
- US-A- 6 122 281
- US-A1- 2001 043 603
- ARMSTRONG T ET AL: "GFP FOR ETHERNET" CONTRIBUTION TO T1 STANDARDS PROJECT, XX, XX, 10 July 2000 (2000-07-10), pages 1-6, XP000949000
- "SERIES G: TRANSMISSION SYSTEMS AND MEDIA, DIGITAL SYSTEMS AND NETWORKS TYPES AND CHARACTERISTICS OF SDH NETWORK PROTECTION ARCHITECTURES" ITU-T RECOMMENDATION G.841, XX, XX, October 1998 (1998-10), page COMPLETE XP000955617

## Description

The present invention relates to the telecommunication field and in particular to a method and device for managing Ethernet frame traffic and transporting such a traffic over a transport SDH/SONET network.

As it is known, traffic generated by an Ethernet apparatus is characterized by discontinuities, namely there are periods with a more or less constant sending rate of Ethernet packets and periods during which a rather long time is provided between a received Ethernet frame and the next one. Such an unstable/inconstant traffic is generally termed "bursty". On the contrary, SDH or SONET traffic is characterized by a constant sending/receiving rate. In other words, any network element of a transport SDH/SONET network sends corresponding frames with a regular and constant rate. Furthermore, Ethernet frames do not have a fixed length/size but only a maximum size (1518 bytes).

It is easy to understand that these discrepancies result in a highly difficult interfacing of two technologies having different natures/characteristics.

An already available solution to the above problem allows the mapping of Ethernet frames into SDH/SONET Virtual Containers as a transparent tributary; all incoming bits are transported to the output interface with the related timing information (frequency for recovering the proper bit rate at the reception side). Within the SDH/SONET payload also the dead times between a received Ethernet frame and the following one are mapped.

Unfortunately, while such a solution could be considered easy to be implemented, the performances of this type of transport are the same as for the transport of a PDH tributary, namely rather low. This best prior solution is strictly tied to SDH architecture and it does not allow to provide new services or to achieve better performances with respect to the transport of a transparent PDH tributary. Furthermore, some bandwidth is wasted because it is used for transporting useless information.

Methods are already known for mapping Ethernet packets over SDH using particular protocols, for example in US-A1-2001/043603 the LAPS protocol.

A system is also known from WO-A1-0115363 for (Ethernet) packet transport in an SDH/SONET ring network which minimizes the latency (delay) transit time of the packets in the nodes. In each node a field in the overhead of every packet is used for checking whether the packet has to be dropped locally or forwarded to the next node.

However those known systems do not address at the best the above mentioned problems of difficult interfacing of two technologies having different natures/characteristics, like SDH/SONET and Ethernet.

In view of the above problems, the general object of the present invention is overcoming them in an efficient manner.

The main scope of the present invention is providing a method and device for an enhanced transport of Ethernet frame traffic over a transport SDH/SONET network.

The above and further objects of the present invention are obtained by a method and device according to claims 1 and 9, respectively. The present invention further comprises a network manager according to claim 8. Further advantageous features of the present invention are set forth in respective dependent claims. All the claims are intended as an integral part of the present description.

The basic idea of the proposed solution is to provide a complete new layer/network over the SDH/SONET network in order to manage the transport of Ethernet traffic over SDH/SONET network; this new layer/network uses the resources of SDH/SONET network in such a way as to optimize the provided services and the performances with reference to this specific type of transport.

The device according to the present invention is able to monitor continuously the Ethernet channel and to distinguish the nature of Carrier Event, so that the frames containing payload can be selected and the idle ones can be disregarded and not mapped in SDH virtual containers.

In order to increase the interfacing between Ethernet and SDH/SONET and better supporting all functionalities to be implemented, it has been decided to insert a further level of data encapsulation.

The present solution allows Ethernet clients to set-up their own Virtual Private Networks (based on point-to-point connections) by means of SDH/SONET network.

The present invention will become clear in view of the following detailed description, to be read having reference to the attached sheets of drawings, wherein:
- Fig. 1 shows the structure of a VPN and relating circuits;
- Fig. 2 is a schematic representation of encapsulation step of Ethernet frames into a SDH/SONET frame;
- Fig. 3 shows a basic scheme of insertion of GFP packets into C-4 containers; and
- Fig. 4 shows in better detail a selected Link with the two related Circuits.

The present invention is implemented by providing a complete new layer/network which is termed NETS (i.e. Network of Ethernet Transport over SDH/SONET). The NETS comprises basic elements to be defined herebelow.

The basic resources of NETS are the SDH/SONET Virtual Containers; the NETS uses these resources as basic pipelines to connect two Ethernet access points (point to point connection).

The NETS model provides different schemes of connection and management of these basic pipelines; by means of this new model it is possible to provide new services and to perform, in a better way, services already provided by SDH/SONET network.

The NETS model is based on five basic elements: Access Point, Link, Circuit, Pipe and Path.

An Access Point (AP) is an Ethernet interface at the boundary of an SDH/SONET network; it is the point where the Ethernet traffic can access/leave the SDH/SONET network.

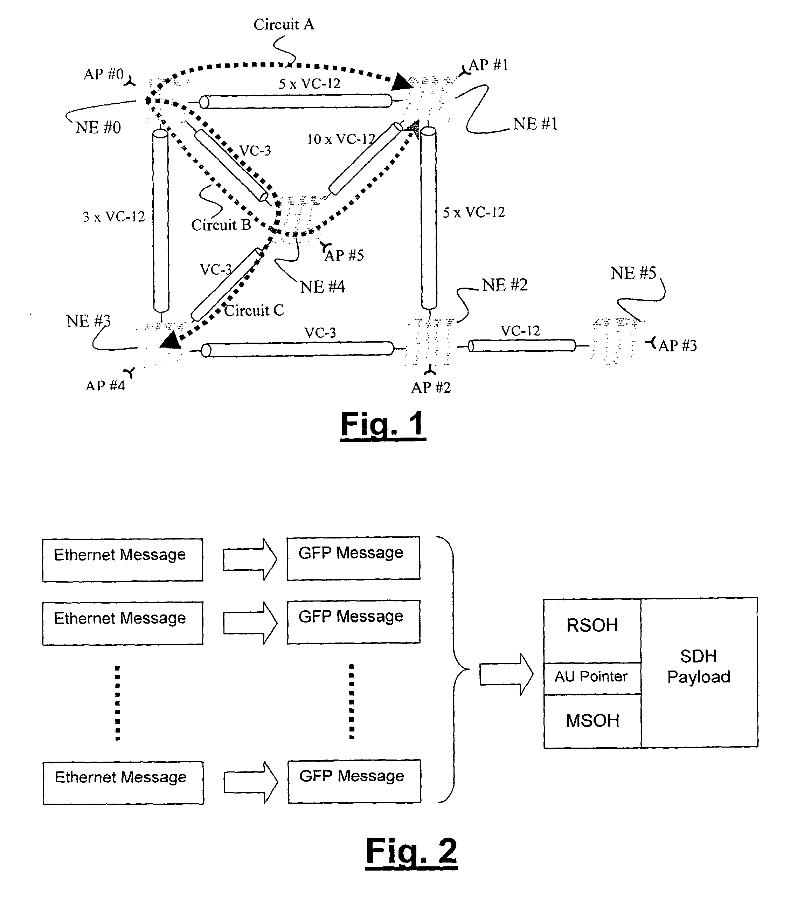

Fig. 1 depicts a simple example of network comprising six Network Elements (NE) with each network element having an Access Point; naturally, a Network Element can host more than one Access Point.

Only the Network Elements with capability to drop/insert Ethernet traffic are depicted; Network Elements that just manage SDH/SONET traffic are transparent and are not depicted.

A pair of Ethernet Access Points defines a point to point connection; this connection is named Link. For instance, with reference to Fig. 1, the pair AP #0 & AP #1 identifies a link; the couple AP #2 & AP #5 defines another link, and so on.

In case two access points are connected to a single link, such a link represents a Point-to-Point connection. Should an access point be connected to more than one link, such an access point is subject to a Point-to-multiPoint connection but the various links are to be considered Point-to-Point connections. In case of multipoint connections, dispatching (sending different frames to several APs) and grooming (aggregations of frames coming from several APs) functionalities should be provided.

An SDH/SONET network could allow for the connection of two Access Points (i.e. to accomplish a Link) by means of different routes; every route is named Circuit. A Circuit is obtained by a Pipe concatenation and could be considered as a series connection of N Pipes.

The following Table 1 lists the possible routes for the Link identified by the Access Points AP #0 & AP #1 in Fig. 1.

**Table 1**

| **LINK** | **RELATED CIRCUITS** |
|---|---|
| AP#0 - AP#1 | NE #0 - NE # 1 |
| | NE #0 - NE#4 - NE #1 |
| | NE #0 - NE #3 - NE #4 - NE #1 |
| | NE #0 - NE #3 - NE #2 - NE #1 |
| | NE #0 - NE #4 - NE #3 - NE#2 - NE #1 |

In principle, also route NE #0 - NE #4 - NE #3 - NE #0 - NE #1 is possible but it is not really significant because it is made up by a ring that leads to the starting point NE #0 and route #1.

Link AP #0 - AP #1 is accomplished by means of these five circuits; of course a subset of all possible Circuits could be selected to accomplish a Link.

In its turn, every Circuit/route that connects two Access Points can be divided into a sequence of smaller segments; every segment is named Pipe.

With reference to the previous list of Circuits, in Table 2 is the description of all the related Pipes.

**Table 2**

| **LINK** | **RELATED CIRCUITS** | **RELATED PIPES** |
|---|---|---|
| AP #0 - AP #1 | NE #0 - NE # 1 | NE #0 - NE # 1 |
| | NE #0 - NE#4 - NE #1 | NE #0 - NE#4 |
| | | NE#4 - NE #1 |
| | NE #0 - NE #3 - NE #4 - NE #1 | NE #0 - NE #3 |
| | | NE #3 - NE #4 |
| | | NE #4 - NE #1 |
| | NE #0 - NE #3 - NE #2 - NE #1 | NE #0 - NE #3 |
| | | NE #3 - NE #2 |
| | | NE #2 - NE #1 |
| | NE #0 - NE #4 - NE #3 - NE#2 - NE #1 | NE #0 - NE #4 |
| | | NE #4 - NE #3 |
| | | NE #3 - NE#2 |
| | | NE#2 - NE #1 |

As it is clear from the above Table 2, a Pipe can be shared among different Circuits.

In its turn, every Pipe comprises one or more SDH/SONET Virtual Containers; this means that its capability is the sum of the capabilities of all the related Virtual Containers.

Here below (see Table 3), with reference again to Figure 1, is a complete Link description with the Pipe composition.

**Table 3**

| **LINK** | **RELATED CIRCUITS** | **RELATED PIPES** | **PIPE COMPOSITION** |
|---|---|---|---|
| AP #0 - AP #1 | NE #0 - NE #1 | NE #0 - NE #1 | 5 x VC - 12 |
| | NE #0 - NE#4 - NE #1 | NE #0 - NE#4 | 1 VC-3 |
| | | NE#4 - NE #1 | 10 x VC-12 |
| | NE #0 - NE #3 - NE #4 - NE #1 | NE #0 - NE #3 | 3 x VC-12 |
| | | NE #3 - NE #4 | 1 VC-3 |
| | | NE #4 - NE #1 | 10 x VC-12 |
| | NE #0 - NE #3 - NE #2 - NE #1 | NE #0 - NE #3 | 3 x VC-12 |
| | | NE #3 - NE #2 | 1 VC-3 |
| | | NE #2 - NE #1 | 5 x VC-12 |
| | NE #0 - NE #4 - NE #3 - NE#2 - NE #1 | NE #0 - NE #4 | 1 VC-3 |
| | | NE #4 - NE #3 | 1 VC-3 |
| | | NE #3 - NE#2 | 1 Vc-3 |
| | | NE#2 - NE #1 | 5 x VC-12 |

The basic pipeline is the Virtual Container that connects two Network Elements; it is named Path.

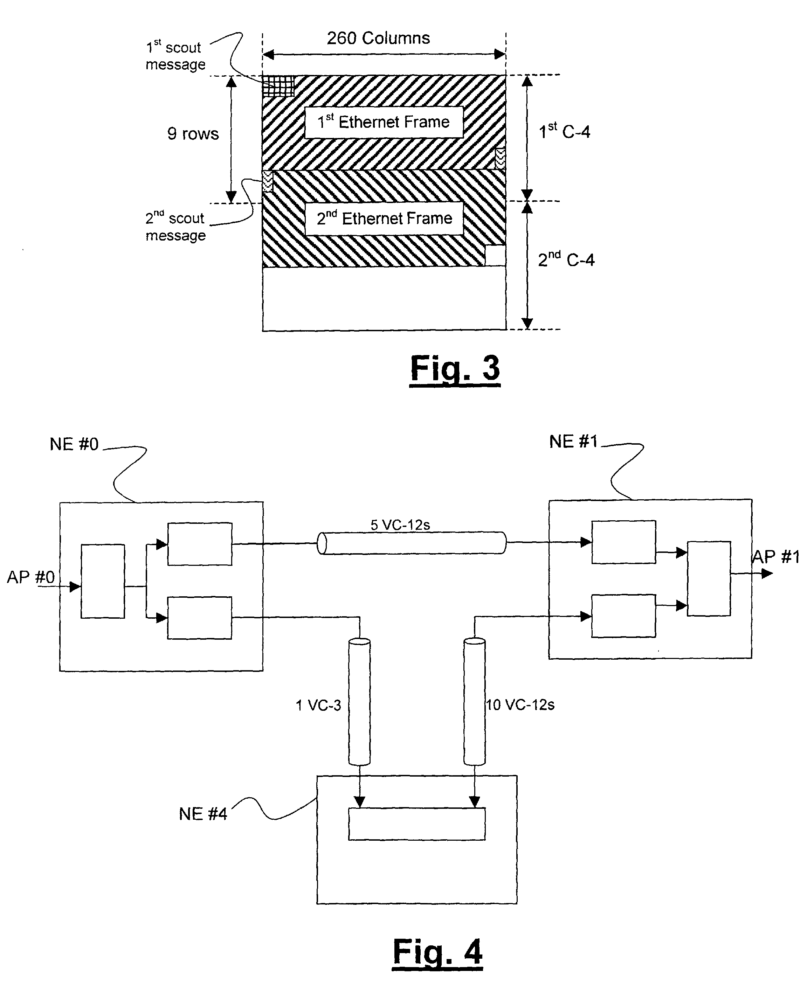

In order to improve the interfacing between Ethernet and SDH/SONET, and for better supporting all the functionalities that have been selected, it has been decided to insert a further level of data encapsulation. The protocol used for this intermediate level is GFP (Generic Frame Procedure). This technique has been selected because GFP packet has been properly defined for allowing the mapping of generic data in transport frames having variable-length payload and based on octet alignment, such as SDH/SONET and OTN (Optical Transport Network). Fig. 3 shows a basic scheme of data encapsulation according to the present invention.

From the figure one can infer that the first encapsulation stage has a 1:1 rate (an Ethernet message is inserted in a GFP message). As far as the mapping of GFP packets into SDH/SONET Virtual Containers is concerned, such a mapping is accomplished by a method similar to the one used for mapping ATM frames. In order to facilitate the comprehension of such a procedure, it is possible to consider the GFP packets as a byte stream to be inserted into Virtual Containers. The number of GFP packets that could be inserted into a VC is variable and depends on two fundamental factors: the VC capacity and the GFP dimension which in turn depends on the Ethernet frame to be transported.

According to these two factors, it is possible that a single GFP packet is mapped into two or more Virtual containers or that a plurality of GFP packets is inserted into a single VC.

In order to recover the GFP frames, it is necessary to perform an alignment to PLI field, which in turn indicates the length of payload data field. The PLI (PDU Length Indication) field will be disclosed below. Some examples of GFP-to-VC-x mapping are also reported below.

In PLI field there are provided two octets. They are the binary number representing the number of octets contained into the payload area of the packet itself.

The monitor information for managing the network according to the present invention are exchanged through the use of proper Scout Message GFP packets. They are control packets that are always sent before sending single packets containing Ethernet frames (in principle, a proper scout message alone is sent in case there are no messages to be transported).

Four different scout messages are provided according to the present invention. In principle, each different scout message covers a portion of the information that is requested by the network that is realized in accordance with the present invention. Conveniently, each Scout Message comprises a SMT (Scout Message Type) field for clearly indicating the type of scout message (for instance: STM for *Path Status Message* = 00; STM for *Complete Status Message* = 01; STM for *Complete Status and Ethernet Message Info =* 02 and STM for *Complete Status and Delay Message* = 03).

The first and simpler Scout Message that is provided is termed *Path Status Message.* It is able to report only the information relating to the path operation condition.

The second Scout Message, termed *Complete Status Message,* contains all the information required for calculating an estimation of delays of data propagation through the virtual private network and the information relating to the operation status of Links, Circuits and Paths.

The third Scout Message, termed *Complete Status and Ethernet Message Info,* is put before the GFP message containing the Ethernet frame. The object of such a packet is to transport all the information relating to the operation status, those information required for calculating the transit time of packets and those information relating to the Ethernet message that is transported.

The fourth Scout Message, termed *Complete Status and Delay Message,* is very similar to the third one but the difference is in that it is sent without a GFP packet containing an Ethernet frame. The object of such a Scout Message is to provide useful indications about transit times of Circuits of a Link even if there are no Ethernet frames to be sent. Just for this reason, all the fields containing information relating to the data message are not significant; only the fields transporting the Path status, the Circuit status, Link status and their delays are considered as valid.

There now follow some examples of mapping Ethernet frames into SDH structures. The very same concepts are equally applicable to SONET structures.

In order to better understand the mapping procedure according to the present invention, the following basic notions and new concepts are set forth.

| | |
|---|---|
| Capacity C-4 | 2340 bytes |
| Capacity C-12 | 136 bytes |
| Capacity C-3 | 756 bytes |

Max size of Ethernet frames: 1518 bytes + 8 bytes (preamble + SDF)
Size of additional GFP fields for an Ethernet frame: 12 bytes
Size of Scout Message *Complete Status and Ethernet Message Info:* 20 bytes
Size of Scout Message *Complete Status Message:* 18 bytes

First Example: mapping a 1526-byte Ethernet frame, together with an accompanying Scout Message, into i) a VC-4, ii) a VC-3 or iii) VC-12. The accompanying Scout Message is *Complete Status and Ethernet Message Info.* Within the GFP packet encapsulating the Ethernet Frame, the Preamble and SFD (Start Frame Delimiter) fields of the Ethernet frame should not be included; thus, in the Payload Data field of GFP, 1518 bytes are inserted. As the Scout Message size is 20 bytes, 1550 bytes are inserted into the SDH frame payload.
i) Mapping into a VC-4: a C-4 container has 2340 bytes and thus it is possible to insert only the Ethernet message together with the respective Scout Message (2340 bytes / 1550 bytes = 1,509). In case two Ethernet frames should be transported, it is clear that the second Ethernet frame and its Scout Message can be only partially inserted in the first container while the remaining bytes should be mapped into the second C-4 (see Fig. 3).
ii) Mapping into a C-3: a C-3 container has 756 bytes and thus three C-3 containers should be used for inserting an Ethernet frame. Two containers will be completely filled while the third one will be only partially used.
iii) Mapping into a C-12: a C-12 has 136 bytes and thus twelve C-12 containers should be used for inserting an Ethernet frame. Eleven containers will be completely filled while the last one will be only partially used.

Second Example: mapping a 18-bytes *Complete Status Message* into iv) C-4, v) C-3 and vi) C-12.
iv) Mapping into a VC-4: a C-4 container has 2340 bytes and thus it is possible to insert 130 *Complete Status Messages.*
v) Mapping into a C-3: a C-3 container has 756 bytes and thus it is possible to insert 42 *Complete Status Messages.*
vi) Mapping into a C-12: a C-12 has 136 bytes and thus seven *Complete Status Messages* could be inserted, with a further *Complete Status Message* being partially inserted.

Naturally, the above calculations are purely theoretic, as the size of an Ethernet frame does not always correspond to the admissible maximum size.

A point-to-point connection of two Access Points is accomplished by the following steps:
a) Defining a Link;
b) Selecting one or more Circuit(s);
c) Defining the size of the related Pipes; and
d) Selecting the related Paths.

As now the point-to-point connection is fully defined, the simple transport of an Ethernet frame is performed by the following steps:
e) Receiving the Ethernet frame at the Ethernet interface of one Access Point;
f) Routing the Ethernet frame to at least one link;
g) Selecting one of the available Circuits;
h) Selecting one available Path of the (first) Pipe of the selected Circuit;
i) Encapsulating the Ethernet frame into the selected available Path (i.e. Virtual Container);
j) Transporting the Ethernet frame up to the next Network Element (namely, up to the end of the Pipe); and
k) Extracting the Ethernet frame from the Virtual Container.

In case the selected Circuit comprises further Pipes, steps h) to k) are repeated in every intermediate Network Element until the last Network Element is reached. Furthermore
l) Inserting the extracted Ethernet frame in a re-ordered queue. In fact, due to the possible skew among different Circuits or among the different Paths of a Pipe, the order of the messages received at the destination Network Element could be different from the order of the messages at the starting Access Point, so a re-ordering action is required. Should just one Circuit and simple Paths be used, step k) is not required.
m) Finally, providing the Ethernet frame to the Ethernet interface of the destination AP.

The above is just an example of simple transport for showing the versatility of the additional network/layer according to the present invention. Herebelow is a detailed description of an Ethernet hitless protection performed through the present invention. In principle, SDH/SONET networks already provide different types of protection (for instance SNCP or MS-SPRING) that can be applied to Ethernet frames as Ethernet frames are encapsulated into SDH/SONET Virtual Containers. The advantage of the Ethernet hitless protection mechanism according to the present invention is that it is performed at the lower possible level, it could be easily hardware implemented and provides hitless performances.

With reference to Fig. 1, let consider the point-to-point connection (Link AP #0 - AP #1) which is identified by the pair of Access Points AP #0 and AP #1. Different routes made up by SDH/SONET Virtual Containers can connect the two Access Points AP #0 and AP #1; for instance, two of them could be Circuit A and Circuit B. Circuit A is the direct route comprising five VC-12; Circuit B is a route comprising a sequence of one VC-3 and ten VC-12 with an intermediate node (NE #4). In principle, several other routes can connect the two Access Points AP #0 and AP #1 but for the aim of this example and for clarity reasons just two of them will suffice.

Fig. 1 highlights the selected Link with the two related Circuits.

The basic idea of the proposed solution comprises the following steps:
□ Every time an Ethernet frame is received at AP #0 of NE #0 it is transmitted along both Circuit A and Circuit B. Clearly, the transmission along two different routes results in a protection service.
□ As a consequence of the previous step, NE #1 receives the same Ethernet frame twice; as a rule, it will accept the frame received from the faster Circuit and discharges the second one. Let consider Circuit B is faster than Circuit A; Ethernet frames received from Circuit B are selected while the frames received from Circuit A are discharged.
□ In case of failure of Circuit B, NE #1 just receives frames from Circuit A and of course accepts them; the protection is accomplished by changing the selection of the Circuit from B to A.

The protection is hitless because the selection is frame-based and the sequence of Ethernet frames is maintained.

Here is a more detailed description of the proposed Ethernet hitless protection solution, having further reference to Figs. 1 and 4.

Every time an Ethernet frame is received at AP #0 of NE #0 it is stored in a queue of incoming messages.

Each frame is labeled in order to recover the exact frame sequence at the ending point. For instance, a sequence of labeled received frames could be FR₁, FR₂, FR₃, ... FRₙ.

The received frame is transmitted by two separate transmitters, TXA and TXB, to Circuit A and Circuit B, respectively. Different types of Virtual Containers (VC-12 for Circuit A and VC-3/VC-12 for Circuit B) perform the transport of a frame along different routes (direct for Circuit A, with an intermediate node for Circuit B). At the receiving node two different receivers are provided (RXA, RXB).

At intermediate node (NE #4) of Circuit B, the Ethernet frames are stored in an intermediate node queue. In principle, the presence of an intermediate node in a Circuit results in a delay in the frame transmission. In the present case, Circuit B is faster than Circuit A because the capability of the two pipes (one VC-3 and ten VC-12) of Circuit B is higher notwithstanding the presence of the intermediate node (NE #4).

This means that a frame (for instance FR₁) from Circuit B is received at NE #1 before the same frame is received from Circuit A; NE #1 just selects the first received one and stores it in a queue of outgoing Ethernet frames that are transmitted at AP #1.

Until both the Circuits are active, only the frames received from the faster one are selected and stored in the queue of outgoing frames; of course the frame sequence is maintained (possibly it is recovered through the label).

If a failure occurs on Circuit B, after the transmission of frame FR₃, NE #1 receives frame FR₄ only once (only from Circuit A).

NE #1 selects frame FR₄ from Circuit A because it is the first received one and stores it in the queue; the same for the following frames until Circuit B is restored.

Frame FR₄ and the following ones are not lost and the frame sequence is maintained; this means that a hitless protection was successfully performed.

When Circuit B is restored, NE #1 changes again its selection into a failure-free hitless mode.

It is important to note that the Circuit selection is frame-by-frame based and it is not related neither to the last selection nor to the reception status of the previous or the following frames. In other words, when a frame labeled as FRₙ₊₁ is received, the Circuit selection is performed independently of the last selection and also independently whether frame FRₙ or FRₙ₊₂ has already been received or not.

Anyway, the reception of frame FRₙ₊₁ before frame FRₙ could occur when the skew between the two Circuits is equal to or longer than the time required for a frame transport or the faster Circuit is restored after a failure.

It could happen that the transport of frame FRₙ is performed by Circuit A only because of the failure of Circuit B but the transport of frame FRₙ₊₁ is performed by both Circuits because Circuit B has been restored. Due to the skew between the two Circuits, NE #1 receives frame FRₙ₊₁ from Circuit B before frame FRₙ from Circuit A. Frame FRₙ₊₁ is stored in the queue and the related selection is Circuit B; also frame FRₙ is stored in the queue but the related selection is Circuit A. Of course, frame FRₙ₊₁ cannot be provided to AP #1 until the reception of frame FRₙ.

The independent frame-by-frame selection of the Circuit is important not only when a Circuit failure occurs/disappears but also when both the Circuits are active.

With reference again to Fig. 1, let consider a further Link, the Link AP #0 - AP #4; one Circuit of this Link (Circuit C) could be made up by a VC-3 between NE #0 and NE #4 and a VC-3 between NE #4 and NE #3. It is realized that the first VC-3 is the same VC-3 used for Circuit B of Link AP #0 - AP #1, i.e. it is a shared resource.

The above results in a transport delay of a frame along Circuit B that also depends on the traffic of the other Circuit (Circuit C) and that can dynamically change.

In case Circuits A, B and C are active and the transport delay along one or both Circuits dynamically changes for the shared resources, the fastest Circuit can dynamically move from Circuit A to Circuit B and *vice versa.* Thus, the Circuit selection can change also without the occurrence of any failures.

The present invention can be implemented both in hardware and software. Advantageously it is hardware implemented through a SDH/SONET network comprising network elements (for instance ADMs and Cross-Connects) and fiber connections. In particular, the new layer according to the invention is provided by a network manager managing the phisical network at an high level. Furthermore, within the network elements (or at least a part thereof) iat least an additional board is provided. Each additional board comprises at least one Ethernet interface, namely an Access Point. Generally, a number of Access Points are provided in each additional board.

According to a preferred embodiment of the present invention, each additional board comprises FPGA means (two FPGAs, namely two Field Programmable Gate Arrays), memory means and lintegrated Circuit means (two ASICs). The network manager provides some information to the additional board (particularly to the FPGAs) comprising which AP should be used, the bit rate of the Ethernet flow (10 or 100 Mb/s) and the SDH/SONET resources to be used for transporting the Ethernet signal. Furthermore, the FPGAs perform several additional tasks such as filling/emptying the virtual containers.

The memory means comprise several memories, namely a data memory, an external memory with routing information, a link memory for storing information about each link and a circuit memory for containing the circuit queues and lables.

A further advantage that is provided by the present invention is that each GFP packet for Ethernet frames comprises a Core Header Error Check field containing a CRC error correction code for protecting the integrity of GFP packet core header. The CRC error correction code according to the present invention is able to correct a single error and to detect any possible further errors. Thus, the advantage is that only the errored Ethernet frames could be discarded when a SDH/SONET frame is received, the error-free frames could be advantageously kept. This is in contrast with the error correction code mechanisms that are provided for correcting errors in the whole SDH/SONET frame.

A still further advantage of the present invention is that it could be applied to any network topology, namely linear, meshed, ring, tree...

## Claims

1. A method for handling Ethernet frame signals in a SDH/SONET network, the SDH/SONET network comprising network elements or nodes and fiber connections connecting the network elements, the method being **characterized by** the step of defining a new layer/network (NETS) in between SDH/SONETand Ethernet, in order to manage the Ethernet signals over the SDH/SONET network, the new layer/network (NETS) using the resources of SDH/SONET network in such a way as to optimize the provided services and the performances with reference to this specific type of transport, wherein the step of defining a new layer/network (NETS) comprises the steps of:
defining at least two Ethernet Access Points (AP), namely Ethernet interfaces at the SDH/SONET network boundary where the Ethernet signals can access/leave the SDH/SONET network;
defining a Link as a pair of Ethernet Access Points providing a point-to-point connection;
for any pair of Ethernet Access Points, defining corresponding Circuits, namely all the possible routes connecting the pair of Access Points through the SDH/SONET network; and
dividing each Circuit into Pipes, namely a sequence of smaller segments.

2. Method according to claim 1, **characterized in that** it further comprises the steps of:
e) receiving the Ethernet frame signals at the Ethernet interface of one Access Point (AP);
f) routing the Ethernet frame signals to at least one link;
g) selecting one of the available Circuits;
h) selecting one available Path of the first Pipe of the selected Circuit;
i) encapsulating the Ethernet frame signals into at least one Virtual Containers of the selected available Path;
j) transporting the Ethernet frame signals to the next Network Element namely, up to the end of the Pipe; and
k) at the Ethernet interface of the destination Access Point, extracting the Ethernet frame signals from the at least one Virtual Container.

3. Method according to claim 2, **characterized by** comprising the additional step of inserting the extracted Ethernet frame in a re-ordered queue.

4. Method according to claim 2, **characterized in that**, in case the selected Circuit comprises further Pipes, steps h) to i) are repeated in any intermediate Network Element until the last Network Element is reached.

5. Method according to claim 2, **characterized in that** step i) comprises the step of mapping the Ethernet frame signals into GFP frames and mapping the GFP frames into Virtual Containers.

6. Method according to claim 2, **characterized in that** step i) comprises the step of providing a scout message containing monitor information for managing the new layer/network (NETS).

7. Method according to claim 2, **characterized in that** step j) comprises the step of transporting the same Ethernet frame signals through at last two different Circuits and step k) comprises the step of performing a hitless frame-based switch in order to select frames from the faster Circuit or from the non failured Circuit.

8. Network manager for managing a SDH/SONET network and handling Ethernet frame signals therein, the SDH/SONET network comprising network elements or nodes and fiber connections connecting the network elements, the manager being **characterized by** comprising: means for providing a new layer/network (NETS) in between SDH/SONETand Ethernet, in order to manage the Ethernet signals over the SDH/SONET network, means for allowing the new layer/network (NETS) using the resources of SDH network in such a way as to optimize the provided services and the performances with reference to this specific type of transport, wherein said means for providing a new layer/network (NETS) comprise:
means for defining at least two Ethernet Access Points (AP), namely Ethernet interfaces at the SDH/SONET network boundary where the Ethernet signals can access/leave the SDH/SONET network;
means for defining a Link as a pair of Ethernet Access Points providing a point-to-point connection;
means for defining, for any pair of Ethernet Access Points, corresponding Circuits, namely all the possible routes connecting the pair of Access Points through the SDH/SONET network; and
means for dividing each Circuit into Pipes, namely a sequence of smaller segments.

9. Device for handling Ethernet frame signals in a SDH/SONET network, the SDH/SONET network comprising network elements or nodes and fiber connections connecting the network elements, **characterised in that** it comprises: means for creating a new layer/network (NETS) in between SDH/SONET and Ethernet, in order to manage the Ethernet signals over the SDH/SONET network;
at least one access point (AP) interface for receiving Ethernet frame signals;
means for routing the received Ethernet frame signals to at least one link, wherein a link is a pair of Ethernet Access Points providing a point-to-point connection in the network;
means for selecting an available Circuit, wherein a Circuit is one of the possible routes connecting the pair of Access Points through the network; and
means for encapsualting the Ethernet frame signals into at least one Virtual Container of the selected available Path.

10. Device according to claim 9, **characterised in that** it further comprises means for estracting the Ethernet frame signals, transported through the network, from the at least one Virtual Container.

11. Device according to claim 9, **characterised in that** it further comprises memory means for storing the Ethernet frame signals in signal queues.

12. Device according to any claims 9-11, **characterized in that** it comprises means for handling information received by a network manager, such information comprising indications of access points to be used, bit rate of incoming Ethernet frames and resources to be associated to a certain access point.

## Patentansprüche

1. Verfahren zur Übertragung von Ethernet Rahmensignalen in einem SDH/SONET Netzwerk, wobei das SDH/SONET Netzwerk Netzwerkelemente oder Knoten und Glasfasern zur Verbindung der Netzwerkelemente umfasst und das Verfahren durch den Schritt **gekennzeichnet** ist, bei dem eine neue Netzwerkschicht (NETS) zwischen SDH/SONET und Ethernet definiert wird, um die Ethernetsignale über das SDH/SONET Netzwerk zu leiten, wobei die neue Netzwerkschicht (NETS) die Ressourcen des SDH/SONET Netzwerks so verwendet, dass die zur Verfügung gestellten Dienste und Leistungsmerkmale im Hinblick auf diese besondere Übertragungsart optimiert werden, wobei der Schritt der Definition einer neuen Netzwerkschicht (NETS) folgende Teilschritte umfasst:
- Definition von wenigstens zwei Ethernet Zugangspunkten (AP), nämlich Ethemet Schnittstellen an den SDH/SONET Netzwerkgrenzen, an denen die Ethernetsignale auf das SDH/SONET Netzwerk zugreifen oder es verlassen können;
- Definition einer Verbindung als Paar von Ethernet Zugangspunkten zur Bereitstellung einer Punkt-zu-Punkt Verbindung;
- Definition entsprechender Leitungen für jedes Paar von Ethernet Zugangspunkten, nämlich aller für die Verbindung der Paare von Ethernet Zugangspunkten möglichen Routen durch das SDH/SONET Netzwerk; und
- Aufteilen jeder Leitung in Pipes, nämlich einer Folge von kleineren Segmenten.

2. Verfahren nach Anspruch 1, **dadurch gekennzeichnet, dass** es weiterhin folgende Schritte umfasst:
e) Empfangen des Ethernet Rahmensignals an der Ethernetschnittstelle eines Zugangspunkts (AP);
f) Routing des Ethernet Rahmensignals zu wenigstens einer Verbindung;
g) Auswahl einer der zur Verfügung stehenden Leitungen;
h) Auswahl eines zur Verfügung stehenden Pfades der ersten Pipe der ausgewählten Leitung;
i) Verkapselung des Ethernet Rahmensignals in wenigstens einen virtuellen Container für den ausgewählten zur Verfügung stehenden Pfad;
j) Übertragung des Ethernet Rahmensignals an das nächste Netzwerkelement, nämlich
bis zum Ende der Pipe; und
k) an der Ethernet Schnittstelle des Bestimmungs- Zugangspunkts Abtrennen des Ethernet Rahmensignals von dem wenigstens einen virtuellen Container.

3. Verfahren nach Anspruch 2, **dadurch gekennzeichnet, dass** es den zusätzlichen Schritt umfasst, dass das abgetrennte Ethernet Rahmensignal in eine umsortierte Warteschlange eingefügt wird.

4. Verfahren nach Anspruch 2, **dadurch gekennzeichnet, dass**, falls die ausgewählte Leitung weitere Pipes umfasst, die Schritte h) bis i) an jedem Zwischennetzwerkelement wiederholt werden, bis das letzte Netzwerkelement erreicht ist.

5. Verfahren nach Anspruch 2, **dadurch gekennzeichnet, dass** der Schritt i) den Schritt des Mappings des Ethernet Rahmensignals in GFP Rahmen und des Mappings der GFP Rahmen in virtuelle Container umfasst.

6. Verfahren nach Anspruch 2, **dadurch gekennzeichnet, dass** der Schritt i) den Schritt des Bereitstellens einer Scoutmeldung umfasst, die Monitorinformation für das Management der neuen Netzwerkschicht (NETS) enthält.

7. Verfahren nach Anspruch 2, **dadurch gekennzeichnet, dass** der Schritt j) den Schritt der Übertragung des gleichen Ethernet Rahmensignals über wenigstens zwei Leitungen umfasst und dass der Schritt k) die Betätigung eines rahmensynchronisierten Hitless Switch umfasst, um Rahmen von der schnelleren Leitung oder von der fehlerfreien Leitung auszuwählen.

8. Netzwerkmanager zum Betreiben eines SDH/SONET Netzwerks und zur Übertragung von Ethernet Rahmensignalen darin, wobei das SDH/SONET Netzwerk Netzwerkelemente oder Knoten und Glasfasern umfasst, die die Netzwerkelemente verbinden und der Netzwerkmanager **dadurch gekennzeichnet ist, dass** er umfasst:
- Mittel zur Bereitstellung einer neuen Netzwerkschicht (NETS) zwischen SDH/SONET und Ethernet, um die Ethernetsignale über das SDH/SONET Netzwerk zu leiten;
- Mittel zur Nutzung der Ressourcen des SDH/SONET Netzwerks auf eine Weise, die die zur Verfügung gestellten Dienste und Leistungsmerkmale im Hinblick auf diese besondere Übertragungsart optimiert, wobei die Mittel zur Bereitstellung einer neuen Netzwerkschicht (NETS) umfassen:
- Mittel zur Definition von wenigstens zwei Ethernet Zugangspunkten (AP), nämlich Ethernet Schnittstellen an den SDH/SONET Netzwerkgrenzen, an denen die Ethernetsignale auf das SDH/SONET Netzwerk zugreifen oder es verlassen können;
- Mittel zur Definition einer Verbindung als Paar von Ethernet Zugangspunkten zur Bereitstellung einer Punkt-zu-Punkt Verbindung;
- Mittel zur Definition entsprechender Leitungen für jedes Paar von Ethernet Zugangspunkten, nämlich aller für die Verbindung der Paare von Ethernet Zugangspunkten möglichen Routen durch das SDH/SONET Netzwerk; und
- Mittel zum Aufteilen jeder Leitung in Pipes, nämlich einer Folge von kleineren Segmenten.

9. Einrichtung zur Übertragung von Ethernet Rahmensignalen in einem SDH/SONET Netzwerk, wobei das SDH/SONET Netzwerk Netzwerkelemente oder Knoten und Glasfasern umfasst, die die Netzwerkelemente verbinden, **dadurch gekennzeichnet, dass** sie umfasst:
- Mittel zur Bereitstellung einer neuen Netzwerkschicht (NETS) zwischen SDH/SONET und Ethernet, um die Ethernetsignale über das SDH/SONET Netzwerk zu leiten;
- wenigstens eine Schnittstelle eines Zugangspunkts (AP) zum Empfang der Ethernet Rahmensignale;
- Mittel zum Routing des empfangenen Ethernet Rahmensignals zu wenigstens einer Verbindung; wobei eine Verbindung ein Paar von Ethernet Zugangspunkten zur Bereitstellung einer Punkt-zu-Punkt Verbindung im Netzwerk ist;
- Mittel zur Auswahl einer der zur Verfügung stehenden Leitungen; wobei eine Leitung eine der für die Verbindung der Paare von Ethernet Zugangspunkten möglichen Routen durch das Netzwerk ist; und
- Mittel zur Verkapselung des Ethernet Rahmensignals in wenigstens einen virtuellen Container für den ausgewählten zur Verfügung stehenden Pfad.

10. Einrichtung nach Anspruch 9, **dadurch gekennzeichnet, dass** sie weiterhin umfasst: Mittel zum Abtrennen der durch das Netzwerk übertragenen Ethernet Rahmensignale von dem wenigstens einen virtuellen Container.

11. Einrichtung nach Anspruch 9, **dadurch gekennzeichnet, dass** sie weiterhin umfasst: Mittel zur Speicherung der Ethernet Rahmensignale in Signalwarteschlangen.

12. Einrichtung nach einem der Ansprüche 9 bis 11, **dadurch gekennzeichnet, dass** sie Mittel umfasst zur Bearbeitung von Informationen, die von einem Netzwerkmanager empfangen werden, wobei diese Informationen Angaben über zu verwendende Netzwerkzugangspunkte, Bitraten der eingehenden Ethernetrahmen und Ressourcen, die bestimmten Zugangspunkten zuzuordnen sind, umfassen.

## Revendications

1. Procédé de manipulation de signaux de trame Ethernet dans un réseau SDH/SONET, le réseau SDH/SONET comprenant des éléments de réseau ou noeuds et des connexions par fibre optique reliant les éléments de réseau, le procédé étant **caractérisé par** l'étape consistant à définir une nouvelle couche/ un nouveau réseau (NETS) entre SDH/SONET et Ethernet, de façon à gérer les signaux Ethernet à travers le réseau SDH/SONET, la nouvelle couche/ le nouveau réseau (NETS) utilisant les ressources du réseau SDH/SONET de façon à optimiser les services fournis et les performances en ce qui concerne ce type spécifique de transport, dans lequel l'étape consistant à définir une nouvelle couche/ un nouveau réseau (NETS) comprend les étapes consistant à :
définir au moins deux points d'accès Ethernet (AP), notamment des interfaces Ethernet, à la limite du réseau SDH/SONET où les signaux Ethernet peuvent accéder au réseau SDH/SONET ou quitter celui-ci ;
définir une liaison comme une paire de points d'accès Ethernet assurant une connexion point à point ;
pour n'importe quelle paire de points d'accès Ethernet, définir des circuits correspondants, notamment tous les acheminements possibles reliant la paire de points d'accès à travers le réseau SDH/SONET ; et
diviser chaque circuit en pipelines, notamment en une séquence de segments plus petits.

2. Procédé selon la revendication 1, **caractérisé en ce qu'**il comprend en outre les étapes consistant à :
e) recevoir les signaux de trame Ethernet à l'interface Ethernet d'un point d'accès (AP) ;
f) acheminer les signaux de trame Ethernet à au moins une liaison ;
g) sélectionner l'un des circuits disponibles ;
h) sélectionner un chemin disponible du premier pipeline du circuit sélectionné ;
i) encapsuler les signaux de trame Ethernet dans au moins un conteneur virtuel du chemin disponible sélectionné ;
j) transporter les signaux de trame Ethernet jusqu'à l'élément de réseau suivant, notamment jusqu'à la fin du pipeline ; et
k) à l'interface Ethernet du point d'accès de destination, extraire les signaux de trame Ethernet dudit au moins un conteneur virtuel.

3. Procédé selon la revendication 2, **caractérisé** en comprenant l'étape supplémentaire consistant à insérer la trame Ethernet extraite dans une file d'attente réorganisée.

4. Procédé selon la revendication 2, **caractérisé en ce que**, au cas où le circuit sélectionné comprendrait des pipelines supplémentaires, les étapes h) à i) sont répétées dans n'importe quel élément de réseau intermédiaire jusqu'à ce que le dernier élément de réseau soit atteint.

5. Procédé selon la revendication 2, **caractérisé en ce que** l'étape i) comprend l'étape consistant à affecter les signaux de trame Ethernet à des trames GFP et à affecter les trames GFP à des conteneurs virtuels.

6. Procédé selon la revendication 2, **caractérisé en ce que** l'étape i) comprend l'étape consistant à fournir un message éclaireur contenant des informations de surveillance pour gérer la nouvelle couche/ le nouveau réseau (NETS).

7. Procédé selon la revendication 2, **caractérisé en ce que** l'étape j) comprend l'étape consistant à transporter les mêmes signaux de trame Ethernet à travers au moins deux circuits différents et l'étape k) comprend l'étape consistant à effectuer une commutation à base de trame sans coïncidence de façon à sélectionner des trames du circuit plus rapide ou du circuit non défectueux.

8. Gestionnaire de réseau permettant de gérer un réseau SDH/SONET et de manipuler des signaux de trame Ethernet dans celle-ci/ celui-ci, le réseau SDH/SONET comprenant des éléments de réseau ou noeuds et des connexions par fibre optique reliant les éléments de réseau, le gestionnaire étant **caractérisé en ce qu'**il comprend :
des moyens pour prévoir une nouvelle couche/ un nouveau réseau (NETS) entre SDH/SONET et Ethernet de façon à gérer les signaux Ethernet à travers le réseau SDH/SONET ;
des moyens pour permettre à la nouvelle couche/ au nouveau réseau (NETS) d'utiliser les ressources du réseau SDH de façon à optimiser les services fournis et les performances en ce qui concerne ce type spécifique de transport,
dans lequel lesdits moyens permettant de prévoir une nouvelle couche/ un nouveau réseau (NETS) comprennent ;
des moyens pour définir au moins deux points d'accès (AP) Ethernet, notamment des interfaces Ethernet à la limite du réseau SDH/SONET où les signaux Ethernet peuvent accéder au réseau SDH/SONET ou quitter celui-ci
des moyens pour définir une liaison comme une paire de points d'accès Ethernet assurant une connexion point à point ;
des moyens pour définir, pour n'importe quelle paire de points d'accès Ethernet, des circuits correspondants, notamment tous les acheminements possibles reliant la paire de points d'accès à travers le réseau SDH/SONET ; et
des moyens pour diviser chaque circuit en pipelines, notamment en une séquence de segments plus petits.

9. Dispositif de manipulation de signaux de trame Ethernet dans un réseau SDH/SONET, le réseau SDH/SONET comprenant des éléments de réseau ou noeuds et des connexions par fibre optique reliant les éléments de réseau, **caractérisé en ce qu'**il comprend :
des moyens pour créer une nouvelle couche/ un nouveau réseau (NETS) entre SDH/SONET et Ethernet de façon à gérer les signaux Ethernet à travers le réseau SDH/SONET ;
au moins une interface de point d'accès (AP) pour recevoir des signaux de trame Ethernet ;
des moyens pour acheminer les signaux de trame Ethernet reçus à au moins une liaison, où une liaison est une paire de points d'accès Ethernet assurant une connexion point à point dans le réseau ;
des moyens pour sélectionner un circuit disponible, où un circuit est l'un des acheminements possibles reliant la paire de points d'accès à travers le réseau ; et
des moyens pour encapsuler les signaux de trame Ethernet dans au moins un conteneur virtuel du chemin disponible sélectionné.

10. Dispositif selon la revendication 9, **caractérisé en ce qu'**il comprend en outre des moyens pour extraire les signaux de trame Ethernet, transportés à travers le réseau, à partir dudit au moins un conteneur virtuel.

11. Dispositif selon la revendication 9, **caractérisé en ce qu'**il comprend en outre des moyens de mémoire pour stocker les signaux de trame Ethernet dans des files d'attente de signal.

12. Dispositif selon l'une quelconque des revendications 9 à 11, **caractérisé en ce qu'**il comprend des moyens pour manipuler des informations reçues par un gestionnaire de réseau, ces informations comprenant des indications de points d'accès à utiliser, le débit binaire des trames Ethernet entrantes et des ressources à associer à un certain point d'accès.
